(19) Europäisches Patentamt
European Patent Office
Office européen des brevets

(11) EP 2 967 107 B1

(12) EUROPEAN PATENT SPECIFICATION

(45) Date of publication and mention of the grant of the patent:
**01.03.2017 Bulletin 2017/09**

(21) Application number: **14714089.1**

(22) Date of filing: **10.03.2014**

(51) Int Cl.:
***A23G 3/34*** *(2006.01)* ***A23G 3/54*** *(2006.01)*

(86) International application number:
**PCT/US2014/022649**

(87) International publication number:
**WO 2014/150230 (25.09.2014 Gazette 2014/39)**

(54) **STABILIZATION OF NATURAL BLUE ANTHOCYANIN-CONTAINING COLORANTS AND PRODUCTS MADE**

STABILISIERUNG VON ANTHOCYANINHALTIGEN FARBSTOFFEN FÜR NATÜRLICHES BLAU UND PRODUKTE DARAUS

STABILISATION DE COLORANTS BLEUS NATURELS CONTENANT DE L'ANTHOCYANINE ET PRODUITS FABRIQUÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201361792810 P**

(43) Date of publication of application:
**20.01.2016 Bulletin 2016/03**

(73) Proprietor: **Mars, Incorporated**
**McLean, VA 22101 (US)**

(72) Inventor: **ROBBINS, Rebecca J.**
**Hackettstown, New Jersey 07840 (US)**

(74) Representative: **Greaves, Carol Pauline**
**C P Greaves & Co**
**80 Church Road**
**Winscombe**
**North Somerset BS25 1BP (GB)**

(56) References cited:
**EP-A1- 1 183 954**
**EP-A1- 2 545 787**
**WO-A1-2011/065977**
**US-A1- 2004 022 904**
**US-A1- 2005 208 189**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

FIELD

The present invention relates to a hard panned coating, a hard panned confection coated with the same, and a method of stabilizing the color provided by natural blue anthocyanin-containing colorants in the hard panned coating of the confection.

Description of the Related Art

There is increasing interest in the food industry to replace synthetic materials for coloring foods with natural colorants.

One challenge in replacing synthetic colorants with natural colorants in the coating of hard panned confections has been in obtaining the stability of color characteristics provided by synthetic colorants.

Natural blue anthocyanin-containing colorants that provide the stability of color characteristics in hard panned confection coatings that is provided by synthetic blue colorants, e.g., FD&C Blue No. 1 and FD&C Blue No. 2, have not been found to this time. The lack of stable natural blue anthocyanin-containing colorants has also made it challenging to obtain desired stable natural green anthocyanin-containing colorants from the blending of natural blue anthocyanin-containing colorants and natural yellow colorants. Red cabbage and purple sweet potato extracts are examples of commercially available natural anthocyanin-containing colorants that may provide blue hues under certain conditions, but these materials do not provide the stability of blue color characteristics in hard panned confection coatings that is provided by synthetic blue colorants such as FD&C Blue No. 1 and FD&C Blue No. 2.

Anthocyanins are water-soluble compounds widely found in the cell vacuoles of fruits, vegetables, and flower petals, and sometimes, roots, leaves, stems, and bracts of plants. Anthocyanin-containing juices and extracts of these plant materials have been used as natural, edible colorants and to produce colorant compositions, in particular, natural red, purple, and blue hue colorant compositions.

An anthocyanin comprises an anthocyanidin (the aglycone) esterified to one or more sugar molecules (the glycone(s)) to form a glycoside. Sugar molecules may be attached at the C-3, C-5, C-7, C-3', C-4', and/or C-5' positions. Examples of sugar molecules found in anthocyanin structures are arabinose, galactose, glucose, rhamnose, rutinose, sambubiose, sophorose, and xylose.

Anthocyanins may also be acylated, i.e., they may have one or more molecules esterified to the sugar molecules, typically at the 6-position of a monosaccharide, but also potentially at the 2-, 3-, or 4-positions. The most common acyl units include those derived from coumaric, ferulic, caffeic, sinapic, gallic, malonic, acetic, malic, succinic, vanillic, and oxalic acids.

The structure of an anthocyanidin is shown below in the flavylium cation form, which is the primary form under acidic conditions. The anthocyanidin may be substituted with hydrogen, hydroxyl, and/or methoxyl groups at various positions:

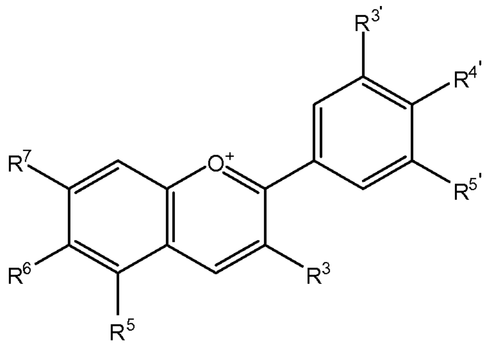

wherein $R^3$ is H or OH,
$R^5$ is H, OH, or $OCH_3$,
$R^6$ is H or OH,
$R^7$ is OH or $OCH_3$,
$R^{3'}$ is H, OH, or $OCH_3$,
$R^{4'}$ is OH or $OCH_3$, and

$R^{5'}$ is H, OH, or $OCH_3$.

The most common anthocyanidins in nature are shown by the following structures:

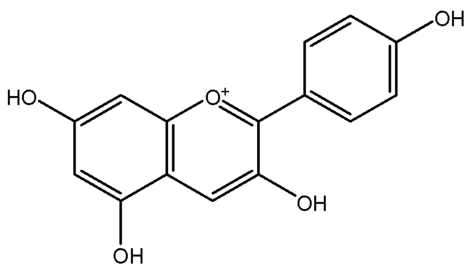

Pelargonidin

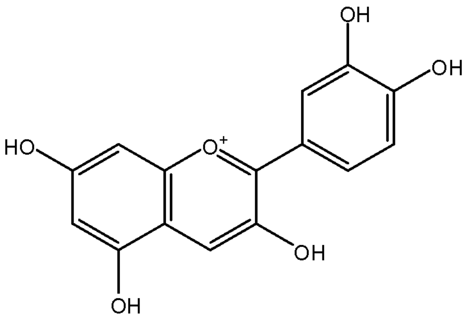

Cyanidin

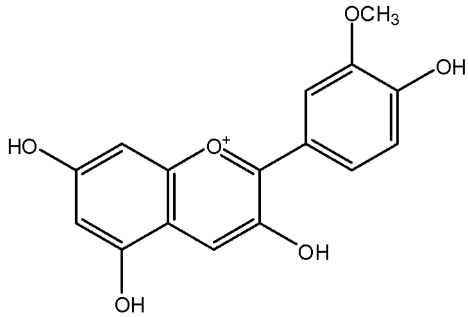

Peonidin

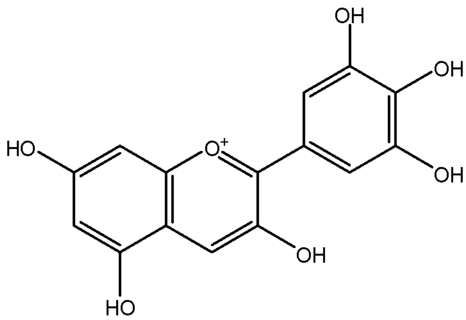

Delphinidin

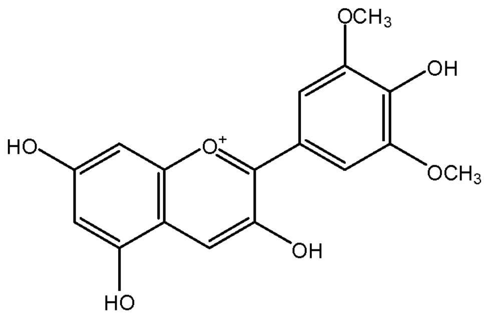

Malvidin

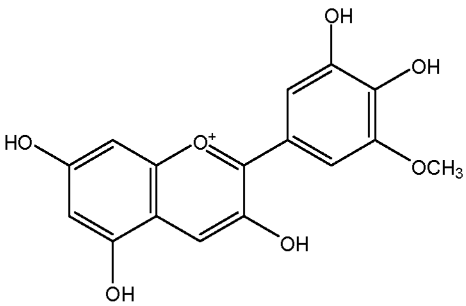

Petunidin

Therefore, the class of compounds known as anthocyanins encompasses an enormous number of structurally diverse compounds based on differences in primary structure, glycosylation and acylation patterns.

Known plant sources of anthocyanins include: (1) vegetables such as red cabbage, purple sweet potato, red potato, blue potato, red radish, black carrot, purple carrot, purple corn, red corn, red onion, purple broccoli, red broccoli, purple cauliflower, rhubarb, black bean, red leaf lettuce, black rice, and eggplant; (2) fruits such as strawberry, raspberry, cranberry, lingonberry, red grape, apple, black currant, red currant, cherry, blueberry, elderberry, bilberry, crowberry, blackberry, chokeberry, gooseberry, açaí, nectarine, peach, plum, blood orange, and blue tomato; and (3) flower petals such as those of 'Heavenly Blue' Morning Glory and 'Better Times' Rose. Each anthocyanin source contains different amounts of multiple, distinct anthocyanin species, with 15 to 30 structurally distinct anthocyanin molecules being common for a given plant source.

The color characteristics of anthocyanin-containing juices and extracts of plant materials change as a result of changing pH. Anthocyanin-containing juices and extracts generally exhibit red hues at low pH, and the hue shifts to purple as the pH is increased. Only a few juices and extracts exhibit a blue hue as pH is increased further.

The change in color of anthocyanin-containing juices and extracts resulting from changes in pH is related to the numerous secondary structures of anthocyanins that may exist in equilibrium with the primary flavylium cation

structure in aqueous solution. When pH is changed, the relative quantities of the different equilibrium structures will change. At a given pH, one or more structural forms may predominate, while others are present in low quantities or not present. For example, at very low pH, the flavylium cation form predominates. As pH is increased, molecules in the flavylium cation form may be deprotonated and converted to the carbinol pseudobase form, which may be further converted through loss of a water molecule and a proton to the neutral and ionized quinonoidal base forms, respectively, and further, to the chalcone form. These transformations reduce the quantity of molecules in the flavylium cation form and increase the quantities in the other equilibrium forms to different extents. Therefore, the different equilibrium structures exist in different relative quantities at higher pH compared to low pH. Each structural form of anthocyanin may absorb light differently, resulting in a different perceived color, including no color. Therefore, as the pH of the solution is changed, changes in the relative quantities of the different structural forms may result in changes in the color of the solution.

The flavylium cation and quinonoidal base structures have conjugated bonds connecting all three rings of the anthocyanin molecules. The extensive delocalized pi bonds allow the flavylium cation and quinonoidal base to absorb visible light, resulting in the perceived red hue of the flavylium cation at low pH and the purple or blue hue of the ionized quinonoidal base at a higher pH. In contrast, the carbinol pseudobase and chalcone structures do not have delocalized pi bonds connecting all three rings and are colorless or slightly yellow.

The substitution pattern of anthocyanins also affects color. For example, it is generally observed that the hue shifts from pink to purple when hydrogen atoms are replaced with hydroxyl groups. Similarly, the number of glycosyl (sugar) units and the number and type of acyl units are observed to affect color. However, these phenomena are not well understood.

Additionally, intermolecular and intramolecular interactions also affect anthocyanin color. The same anthocyanin may produce different hues depending on the other molecules present. For example, it is believed that acyl groups on the anthocyanin sugars can fold in and protect the flavylium cation C-2 position from nucleophilic attack. Therefore, this intramolecular interaction prevents formation of the colorless carbinol pseudobase structure. Similarly, it is believed that anthocyanin molecules self-associate, which is evidenced by the fact that a two-fold increase in anthocyanin concentration can cause a 300-fold increase in chroma, and can change the hue and value as well. It is hypothesized that this self-association is similar to intramolecular stacking, and prevents nucleophilic attack and formation of the carbinol pseudobase structure.

Although it is known that factors such as pH, anthocyanin chemical structure, substituent patterns, inter- and intra-molecular interactions all impact the color observed in anthocyanin-containing juices and extracts of plant materials, it is not well understood how these factors interact to alter color; i.e., the specific cause and effect are not predictable.

All of these phenomena may impact the color and color stability of hard panned confections having sugar-based coatings colored with natural anthocyanin-containing colorants. It has been observed that a hard panned sugar-based coating colored with a natural blue anthocyanin-containing colorant will quickly shift from a blue hue to a periwinkle or violet hue shortly after production. When a green-colored hard panned sugar-based coating is prepared using a natural blue anthocyanin-containing colorant in combination with a natural yellow colorant, e.g., turmeric, the color of the coating will quickly shift from a green hue to a mustard hue shortly after production. Factors that may precipitate anthocyanin structural changes and associated color changes in the coatings are believed to include moisture migration out of the coating, moisture ingress into the coating from the environment, metal ions and compounds in water used to prepare sugar syrups, and changes in the crystalline structure of the coating that continue after production has been completed.

WO 2011/065977 discloses a method of preparing and stabilizing a blue colorant by combining a buffer, an anthocyanin, and a divalent ion source, such as calcium carbonate. In an example, calcium carbonate is intimately combined with a sodium carbonate buffer, red cabbage powder (anthocyanin source), and other ingredients using a high-speed blade mixer, and the resulting colorant formulation is used for pan coating placebos. There is no contemplation of segregating the calcium carbonate from the anthocyanin material in separate coating layers of the panned coating.

EP2545787 discloses a composition comprising anthocyanin and sodium hydrogen carbonate to stabilize the colour. It also discloses that this composition might be used for colouring dragee coatings. However, both carbonate salt and anthocyanin are mixed together.

US 2004/022904 discloses a sugar hard pan coating comprising anthocyanin, said anthocyanin being stabilized by adjusting the pH with a solution of NaOH.

EP1183954 discloses an anti-fading composition for stabilizing anthocyanin colour, said composition comprising at least one oligosaccharide selected from the group consisting of nigerooligosaccharide, maltooligosaccharide and panose.

US 2005/208189 discloses a method to stabilize anthocyanins, by using dry extracts of hard shell fruits.

The prior art has not provided a method of stabilizing the color provided by natural blue anthocyanin-containing colorants in the coating of a hard panned confection without modifying and combining the anthocyanin-containing colorant with other materials. In addition, the prior art has not described hard panned confections having sugar-based coatings colored with natural blue anthocyanin-containing colorants that demonstrate improved color stability closer to the color stability obtained with synthetic blue colorants such as FD&C Blue No. 1 and FD&C Blue No. 2.

It is desirable to have a method that allows a broad palette of colorants to be used for coloring hard panned coatings for hard panned confections, including natural anthocyanin-containing colorants sourced from juices and extracts of plant materials. In particular, there is a need for a method of stabilizing natural blue anthocyanin-containing colorants in the coating of a hard panned confection. Naturally colored hard panned confections with stable blue and green hues are a desired product of such a method.

## BRIEF DESCRIPTION OF THE DRAWINGS

**Fig. 1** demonstrates the effect of no additive, titanium dioxide as an additive, and calcium carbonate as an additive in a first coating syrup on the color stability of hard panned confections colored with a natural blue anthocyanin-containing colorant and stored under different environmental conditions. The figure shows ΔE color difference values for each trial sample after seven days of storage under different environmental conditions compared to the same sample stored at a water activity of 0.0.

**Fig. 2** demonstrates the effect of titanium dioxide, calcium carbonate, or titanium dioxide and calcium carbonate together as an additive in a first coating syrup on the color stability of hard panned confections colored with an alternate natural blue anthocyanin-containing colorant and stored under different environmental conditions. The figure shows ΔE color difference values for each trial sample after seven days of storage under different environmental conditions compared to the same sample stored at a water activity of 0.0.

**Fig. 3** demonstrates the effect of using deionized water versus tap water with calcium carbonate as an additive in a first coating syrup on the color stability of hard panned confections colored with a natural blue anthocyanin-containing colorant and stored under different environmental conditions. The figure shows ΔE color difference values for each trial sample after seven days of storage under different environmental conditions compared to the same sample stored at a water activity of 0.0.

## SUMMARY OF THE INVENTION

The present invention is directed to a hard panned coating comprising a natural blue anthocyanin-containing colorant, wherein the color provided to the coating by the colorant is stabilized.

In one embodiment, the hard panned coating has a plurality of coating layers, the plurality of coating layers comprising a first coating layer comprising a sugar and a food-grade calcium carbonate and a second coating layer comprising a sugar and a natural blue anthocyanin-containing colorant, wherein none of the plurality of coating layers contains both a natural blue anthocyanin-containing colorant and a food-grade calcium carbonate. In some embodiments, the second coating layer of the hard panned coating also includes a natural yellow colorant.

In another embodiment, the hard panned coating has a color having a ΔE color difference of 10 or less after seven days of storage at a water activity of 0.75 compared to the color after seven days of storage at a water activity of 0.0. In some embodiments, the hard panned coating has a blue or green color at least partly provided by the natural blue anthocyanin-containing colorant, which has a blue color in aqueous solution at a pH of 6 to 10.

The present invention is also directed to a hard panned confection coated with a hard panned coating comprising a natural blue anthocyanin-containing colorant, wherein the color provided by the colorant to the coating is stabilized.

In one embodiment, the hard panned confection comprises an edible product center, a hard panned coating having a plurality of coating layers, the plurality of coating layers comprising a first coating layer comprising a sugar and a food-grade calcium carbonate and a second coating layer comprising a sugar and a natural blue anthocyanin-containing colorant, wherein none of the plurality of coating layers contains both a natural blue anthocyanin-containing colorant and a food-grade calcium carbonate. In some embodiments, the second coating layer of the hard panned confection also includes a natural yellow colorant.

In another embodiment, the hard panned confection has a color having a ΔE color difference of 10 or less after seven days of storage at a water activity of 0.75 compared to the color after seven days of storage at a water activity of 0.0. In some embodiments, the hard panned confection has a blue or green color at least partly provided by the natural blue anthocyanin-containing colorant, which has a blue color in aqueous solution at a pH of 6 to 10.

In another aspect, the present invention is directed to a method of hard pan coating an edible product center with a coating comprising a natural blue anthocyanin-containing colorant, wherein the color provided to the coating by the colorant is stabilized.

In one embodiment, the method of hard pan coating the edible product center comprises the steps of applying a plurality of coating layers to the edible product center, wherein applying comprises applying a first coating layer comprising a sugar and a food-grade calcium carbonate to the edible product center and applying a second coating layer comprising a sugar and a natural blue anthocyanin-containing colorant to the edible product center, wherein none

of the plurality of coating layers contains both a natural blue anthocyanin-containing colorant and a food-grade calcium carbonate. In some embodiments, a natural yellow colorant is included in the second coating layer applied.

In another aspect, the present invention is directed to a method of stabilizing the color provided by a natural blue anthocyanin-containing colorant to a hard panned coating.

In one embodiment, the method of stabilizing the color provided by a natural blue anthocyanin-containing colorant to a hard panned coating having a plurality of coating layers comprises applying the plurality of coating layers such that none of the plurality of coating layers contains both a natural blue anthocyanin-containing colorant and a food-grade calcium carbonate.

## DETAILED DESCRIPTION OF THE INVENTION

The present specification provides certain definitions and methods to better define the present invention and to guide those of ordinary skill in the art in the practice of the present invention. Provision, or lack of the provision, of a definition for a particular term or phrase is not meant to imply any particular importance, or lack thereof. Rather, and unless otherwise noted, terms are to be understood according to conventional usage by those of ordinary skill in the relevant art. The terms "first," "second," and the like, as used herein, do not denote any order, quantity, or importance, but rather are used to distinguish one element from another. Also, the terms "a" and "an" do not denote a limitation of quantity, but rather denote the presence of at least one of the referenced item.

The term, "edible," means that which can be eaten by humans and animals as food, and should be distinguished from "non-toxic," which means that which may be ingested and tolerated, but which is not consumed as food.

A "sugar syrup" is a liquid material comprising at least a sugar and water, wherein the sugar is dissolved in the water in an amount of at least 60% sugar solids by weight of the syrup. Other components may also be present.

A "coating layer" is a layer obtained by one application of a coating material, e.g., a sugar syrup, to a substrate being coated.

A "coating" is the total amount of coating material, e.g., one or more sugar syrups, applied to a substrate upon completion of a coating process, which may comprise one or more steps of applying a coating material to the substrate.

A "divalent metal cation" is a metal atom having a +2 charge, e.g., $Ca^{2+}$, $Mag^{2+}$, $Cu^{2+}$, $Fe^{2+}$, and the like.

A "monovalent metal cation" is a metal atom having a +1 charge, e.g., $Na^{+}$, $K^{+}$, and the like.

A "carbonate ion" is an anion having the empirical formula, $CO_3^{2-}$.

"Calcium carbonate" is an ionic compound having the empirical formula, $CaCO_3$, and is classified as a carbonate mineral.

A "food-grade calcium carbonate" is a calcium carbonate material that is of a grade acceptable for use in edible products, e.g., affirmed GRAS (Generally Recognized as Safe) by the U.S. Food and Drug Administration. The food-grade calcium carbonate may be a precipitated calcium carbonate.

A "colorant" is any substance that imparts color by absorbing or scattering light at different wavelengths. A "natural colorant" is a colorant that exists in or is produced by nature or is sourced therefrom. A "blue colorant" is a colorant that reflects light at wavelengths in the region of 450-495 nanometers and has a maximum UV/VIS wavelength absorbance ranging from 615 to 635 nanometers. A "natural anthocyanin-containing colorant" is a natural colorant comprising anthocyanins sourced from plants. The term, "food-grade," when used herein to describe any colorant, means that the colorant is of a grade acceptable for use in edible products.

References to "FD&C Blue No. 1" include the different names given to the identical synthetic blue colorant, Brilliant Blue FCF and European Commission E133.

References to "FD&C Blue No. 2" include the different names given to the identical synthetic blue colorant, Indigo Carmine, Indigotine, or European Commission E132.

"Hue" refers to the color property that gives a color its name, for example red, orange-red, blue, violet, etc.

"Chroma" is a color property indicating the purity of a color, where higher chroma is associated with greater purity of hue and less dilution by white, gray, or black.

"Value" is a color property indicating the lightness or darkness of a color, where higher value is associated with greater lightness.

The terms "color" and "color characteristics" are used interchangeably, and encompass color properties such as hue, chroma, purity, saturation, intensity, vividness, value, lightness, brightness, and darkness, and color model system parameters used to describe these properties, such as Commission Internationale de l'Eclairage CIE 1976 CIELAB color space L*a*b* values and CIELCH color space L*C*h° values. The CIELAB and CIELCH color models provide more perceptually uniform color spaces than earlier color models. Colorants are analyzed with a spectrophotometer, and CIELAB L*a*b* and CIELCH L*C*h° values are calculated from the spectral data. The L*a*b* and L*C*h° values provide a means of representing color characteristics and assessing the magnitude of difference between two colors.

L*a*b* values consist of a set of coordinate values defined in a three-dimensional Cartesian coordinate system.

L* is the value, or lightness, coordinate. L* provides a scale of lightness from black (0 L* units) to white (100 L* units) on a vertical axis. a* and b* are coordinates related to both hue and chroma. a* provides a scale for greenness (- a* units) to redness (+ a* units), with neutral at the center point (0 a* units), on a horizontal axis. b* provides a scale for blueness (- b* units) to yellowness (+ b* units), with neutral at the center point (0 b* units), on a second horizontal axis perpendicular to the first horizontal axis. The three axes cross where L* has a value of 50 and a* and b* are both zero.

L*C*h° values consist of a set of coordinate values defined in a three-dimensional cylindrical coordinate system. L* is the value, or lightness, coordinate. L* provides a scale of lightness from black (0 L* units) to white (100 L* units) on a longitudinal axis. h° is the hue coordinate. h° is specified as an angle from 0° to 360° moving counterclockwise around the L* axis. Pure red has a hue angle of 0°, pure yellow has a hue angle of 90°, pure green has a hue angle of 180°, and pure blue has a hue angle of 270°. The C* coordinate represents chroma and is specified as a radial distance from the L* axis. C* provides a scale from achromatic, i.e., neutral white, gray, or black, at the L* axis (0 C* units) to greater purity of hue as the coordinate moves away from the L* axis (up to 100 or more C* units). C* and h° can be calculated from a* and b* using Equations 1 and 2:

$$C^* = (a^{*2} + b^{*2})^{0.5} \qquad (1)$$

$$h^\circ = \arctan\left(\frac{b^*}{a^*}\right) \qquad (2)$$

"Delta E," "$\Delta E_{ab}$*," or "$\Delta E$" is a measure of the magnitude of total color difference between two colors represented in CIELAB L*a*b* color space. It has been reported that an experienced color observer cannot distinguish any difference between two colors when the $\Delta E$ is 2.3 or less. The $\Delta E$ of two different colors with L*a*b* values, $L^*_1a^*_1b^*_1$ and $L^*_2a^*_2b^*_2$, is calculated using Equation 3:

$$\Delta E_{ab}^* = \sqrt{(L^*_1 - L^*_2)^2 + (a^*_1 - a^*_2)^2 + (b^*_1 - b^*_2)^2} \qquad (3)$$

The CIELAB L*a*b* and CIELCH L*C*h° values of hard panned confections presented herein, in all instances unless stated otherwise, were calculated from spectral data obtained with a Konica Minolta Spectrophotometer CM-3500d operated in reflectance mode, with CIE Standard Illuminant D65 and 10° observer angle.

The present invention is directed to a hard panned coating comprising a natural blue anthocyanin-containing colorant, wherein the color provided by the colorant to the coating is stabilized. Hard panned coatings are used to provide flavor, texture, and color to edible products, including hard panned confections such as sugar shelled chocolate centers. In the confectionery market, color is a particularly appreciated attribute. Although synthetic colorants have been employed to color confections for a number of years, alternatives are yet desired that would be perceived by consumers as being more naturally derived.

However, it has been difficult to obtain the color stability provided by synthetic colorants when natural colorants are used in many confectionery product applications. Natural colorants are generally more sensitive to heat, light, moisture, and other environmental factors than synthetic colorants. These factors may cause them to degrade or undergo reactions or transformations that alter their molecular structure. Anthocyanin-containing colorants, for example, will undergo changes in structure with changes in pH, and these changes may alter their perceived color, even rendering them colorless.

Blue anthocyanin-containing colorants are particularly problematic, as the blue hue that they provide has been observed to be unstable and subject to color shift. When a natural blue anthocyanin-containing colorant is used to color a hard panned coating, the coating color quickly shifts after production from blue to periwinkle or violet. This phenomenon also impacts green colored hard panned coatings colored with a blend of a natural blue anthocyanin-containing colorant and a natural yellow colorant. In these cases, the initial color of the coating quickly shifts from green to mustard colored. Therefore, a solution for stabilizing the color of a natural blue anthocyanin-containing colorant in a hard panned coating is desired.

In one embodiment of the invention, the hard panned coating has a plurality of coating layers, the plurality of coating layers comprising a first coating layer comprising a sugar and a food-grade calcium carbonate and a second coating layer comprising a sugar and a natural blue anthocyanin-containing colorant, wherein none of the plurality of coating layers contains both a natural blue anthocyanin-containing colorant and a food-grade calcium carbonate. In some embodiments, the second coating layer of the hard panned coating also includes a natural yellow colorant.

The hard panned coating of the invention comprises at least a first coating layer and a second coating layer,

each comprising at least one sugar. The one or more sugars in the first coating layer may be the same or different than the one or more sugars in the second coating layer. The sugars are selected according to their well known properties, e.g., crystallizing ability and flavor impact, to function effectively in a hard pan coating process and deliver the desired organoleptic characteristics to the coating, e.g., crunch and sweetness.

In embodiments, the sugars are selected from a monosaccharide, a disaccharide, and combinations thereof. In embodiments including a monosaccharide, the sugar is a monosaccharide selected from fructose, glucose, dextrose, maltose, and combinations thereof. In embodiments including a disaccharide, the sugar is sucrose.

The sugars are preferably provided to the first and second coating layers as sugar syrups comprising one or more sugars and water. The sugar syrups may contain at least 60 wt% sugar solids, or at least 65 wt% sugar solids, or at least 70 wt% sugar solids. The sugar syrups may contain less than 85 wt% sugar solids, or less than 80 wt% sugar solids. In some embodiments, the sugar syrup contains from 70 wt% to 80 wt% sugar solids. In embodiments using sucrose as the sole sugar in a sugar syrup, the sucrose sugar syrup may be at least 60° Brix, or at least 65° Brix, or at least 70° Brix. The sucrose sugar syrup may be less than 85° Brix, or less than 80° Brix. In some of these embodiments, the sucrose sugar syrup is from 70° Brix to 80° Brix.

A sugar syrup may also include other components conventionally used in hard panned coatings. Many such components are known in the art and include, but are not limited to, sugar alcohols, high intensity sweeteners, natural polymers, flavors, flavor modifiers, sensates, gums, vitamins, minerals, nutraceuticals, or combinations of these. For example, a gum may be included in a sugar syrup to act as a plasticizer in the crystallized sugar coating.

At least one sugar syrup used in a coating layer of the hard panned coating comprises one or more natural food-grade colorants. The natural food-grade colorants may be provided in any form, e.g., liquid, crystal, paste, or powder, that dissolves or disperses readily in a sugar syrup for best results in producing the hard panned coating,. Suitable concentrations of natural food-grade colorants can range from 0.01 wt% to 20 wt%, or from 0.05 wt % to 15 wt%, or from 0.1 wt% to 10 wt%.

In a preferred embodiment, a natural blue anthocyanin-containing colorant is one of the one or more natural food-grade colorants in a sugar syrup used in a coating layer of the hard panned coating. In some of these embodiments, both a natural blue anthocyanin-containing colorant and a natural yellow colorant are included in a sugar syrup used in a coating layer of the hard panned coating.

Natural blue anthocyanin-containing colorants may be sourced from vegetables, fruits, and flower petals. In some embodiments, the natural blue anthocyanin-containing colorant comprises one or more vegetable, fruit, and flower petal juices and extracts. An "anthocyanin-containing vegetable, fruit, or flower petal juice" may be obtained by pressing liquid out of the fruit, vegetable, or flower petals. An "anthocyanin-containing vegetable, fruit, or flower petal extract" may be obtained by washing macerated fruit, vegetables, or flower petals with a solvent (e.g., water, alcohol). Juices and extracts may contain anthocyanins as well as many other naturally occurring compounds, including, for example, carbohydrates, acids, flavonoids, metal ions, phenolic acids, phenolic acid esters, and vitamins. Vegetable, fruit, and flower petal juices or extracts may include processed juices and extracts, including, for example, reconstituted juices and extracts, deodorized juices and extracts, and juices and extracts subjected to other processes for removing specific or broad classes of compounds.

Any juice or extract that provides blue hues at high pH, e.g., a pH of 6 to 10, or 7 to 9, may be used. In one embodiment, the source of the natural blue anthocyanin-containing colorant used in the hard panned coating of the invention is a vegetable, fruit, or flower petal juice or extract obtained from red cabbage, purple sweet potato, blue potato, purple carrot, black carrot, blue flower petals, or a combination thereof. In some of these embodiments, the natural blue anthocyanin-containing colorant comprises a red cabbage extract or a combination of a red cabbage extract and a purple sweet potato extract.

The natural blue anthocyanin-containing colorant may consist of only anthocyanins or may also include other plant compounds and/or added materials typically used with colorants to facilitate their use, e.g., liquid carriers including water, alcohol, and glycerin, and solid carriers including maltodextrin, starch, and sugar. The composition may take the form of a solid, e.g., a powder, or a liquid solution, e.g., an aqueous liquid.

Suitable natural yellow colorants may include, but are not limited to, curcuminoids (e.g., from turmeric), carotenoids (e.g., from saffron and gac), annatto (e.g., from achiote), and combinations thereof. In some embodiments, the natural yellow colorant is derived from turmeric.

When a colorant is included in one or more sugar syrups used for hard pan coating, the hard panned coating desirably has a visible color provided by the colorant. A hard panned confection comprising an edible product center coated with this same hard panned coating also has a visible color provided by the colorant. In some embodiments, the hard panned coating has a blue color, and a hard panned confection coated with this same hard panned coating has a blue color. The blue color may be provided at least in part by a natural blue anthocyanin-containing colorant incorporated in the coating. In other embodiments, the hard panned coating has a green color, and a hard panned confection coated with this same hard panned coating has a green color. The green color may be provided at least in part by a natural blue anthocyanin-containing colorant and a natural yellow colorant incorporated in the coating.

At least one sugar syrup used in a coating layer of the hard panned coating comprises a food-grade calcium carbonate. In one embodiment, the food-grade calcium carbonate is a precipitated calcium carbonate. In some embodiments, the median particle size of the food-grade calcium carbonate is 1 micron or less, 0.8 microns or less, or 0.7 microns or less, or 0.6 to 0.8 microns.

The amount of calcium carbonate to be used is limited only by practicality, e.g., enough should be used so that the desired benefit will be seen, but desirably, no greater amount will be used than that needed to achieve the same. Advantageously, small amounts, e.g., as low as 1 wt%, of calcium carbonate have found to be effective to provide at least some benefit. Amounts of at least 5 wt%, or 4 wt%, or 3 wt%, or 2 wt%, or 1 wt% are suitable. Amounts of more than 11 wt%, or 12 wt%, or 13 wt%, or 14 wt% or 15 wt% may provide no further benefit, and so, are not used in some embodiments. In some embodiments, the calcium carbonate is provided in the sugar syrup in amounts of from 1 wt% to 15 wt%, or from 3 wt% to 14 wt%, or from 5 wt% to 13 wt% or from 7 wt% to 12 wt%, or from 9 wt% to 10 wt%. In some embodiments, the calcium carbonate is provided in the sugar syrup in amounts of from 1 wt% to 10 wt%.

Calcium carbonate is included in one or more coating layers of the hard panned coating that do not comprise a colorant, in particular, a natural blue anthocyanin-containing colorant. That is, calcium carbonate is excluded from coating layers that comprise a natural blue anthocyanin-containing colorant, because the alkalinity of calcium carbonate raises pH to about 9 and shifts the color provided by the anthocyanin-containing colorant to turquoise instead of blue. A sugar and a food-grade calcium carbonate are included in a first coating layer of a hard panned coating, and the first coating layer does not include a natural blue anthocyanin-containing colorant.

Conversely, a natural blue anthocyanin-containing colorant is included in one or more coating layers of the hard panned coating that do not comprise calcium carbonate. That is, the natural blue anthocyanin-containing colorant is excluded from coating layers that comprise calcium carbonate. A sugar and a natural blue anthocyanin-containing colorant are included in a second coating layer of a hard panned coating.

In one embodiment of the hard panned coating, the color of the hard panned coating has a ΔE color difference of 10 or less after seven days of storage at a water activity of 0.75 compared to the color after seven days of storage at a water activity of 0.0. In some embodiments, the ΔE is 8 or less, or 6 or less, or as low as 4 or less. That is, the color of the hard panned coating demonstrates resistance to color change even under challenging environmental moisture conditions.

A hard panned coating having a stable color provided by a natural blue anthocyanin-containing colorant is of value for use as a coating for a confection. Therefore, in another aspect, the present invention is directed to a hard panned confection comprising an edible product center and a hard panned coating having a plurality of coating layers, the plurality of coating layers comprising a first coating layer comprising a sugar and a food-grade calcium carbonate and a second coating layer comprising a sugar and a natural blue anthocyanin-containing colorant, wherein none of the plurality of coating layers contains both a natural blue anthocyanin-containing colorant and a food-grade calcium carbonate.

The coating layers of the hard panned confection may be applied to any desired edible product center. In some embodiments, the edible product center may comprise a natural center, e.g., a nut, groundnut, nut meat, nut paste, dried or infused fruit piece, or dried fruit paste. Or, the edible product center may comprise a confection, e.g., a boiled sugar syrup, caramel, nougat, taffy, toffee, fondant, chocolate, confectionery coating, or combinations of these. Alternatively, the edible product center may comprise a grain-based item, e.g., a cookie, pretzel, biscuit, wafer, cracker, or other baked, crisped, or puffed material. In some embodiments, the edible product center may comprise a natural center, confection, or grain-based item which is then coated with a confection.

Prior to the application of one or more sugar syrup layers, the surface of the edible product center may be prepared according to known techniques in the art such as gumming, isolating, and stabilizing. For example, in gumming, layers of a high glucose content syrup containing a gum, gelatin, starch, or dextrin may be applied directly to the edible center alternately with a fine crystalline sugar to fill irregularities and smooth ridges. The smoother surface that is obtained may facilitate even coating and adherence of the later applied sugar syrup layers. Isolating is a process of creating a barrier to lipid, water, or natural sugar migration between the edible center and the sugar syrup layers, and may be effected by applying a film containing gelatin or gum to the center in a process similar to gumming. Stabilizing may be required to strengthen a fragile edible center for subsequent hard pan coating with sugar syrups. A cookie center, for example, may be prevented from crumbling during hard pan coating by first being coated with a melted fat, then isolated with a gum-containing film. Preparation of the surface of the edible core may also be completed with one or more applications of a sucrose sugar syrup.

In some embodiments, sugar syrups may be applied as coating layers directly to the surface of an edible product center. In other embodiments, sugar syrups may be applied as coating layers to a prepared surface of an edible product center, wherein the surface has been prepared according to a known technique including, but not limited to, gumming, isolating, and stabilizing. In still other embodiments, sugar syrups may be applied as coating layers to a crystallized sugar syrup layer overlying any number of coating layers overlying the edible product center. As the phrase that follows in quotation marks is used herein, the application of a sugar syrup as a coating layer "to an edible product center" does

not necessarily denote that the sugar syrup is applied directly to the edible product center. Rather, a sugar syrup that is applied as a coating layer "to an edible product center" may be applied directly to the surface of the edible product center, or to a prepared surface of an edible product center, or to a crystallized sugar syrup layer overlying any number of coating layers overlying the edible product center, within the meaning of the phrase.

A hard panned confection having a hard panned coating of the invention demonstrates resistance to color change. That is, in some embodiments, the hard panned confection has a color having a ΔE color difference of 10 or less after seven days of storage at a water activity of 0.75 compared to the color after seven days of storage at a water activity of 0.0. Smaller ΔE values of 8 or less, or 6 or less, or 4 or less may also be seen.

In another aspect, the present invention is directed to a method of hard pan coating an edible product center comprising applying a plurality of coating layers to the edible product center, wherein applying comprises applying a first coating layer comprising a sugar and a food-grade calcium carbonate to the edible product center and applying a second coating layer comprising a sugar and a natural blue anthocyanin-containing colorant to the edible product center, wherein none of the plurality of coating layers contains both a natural blue anthocyanin-containing colorant and a food-grade calcium carbonate. In some embodiments, a natural yellow colorant is included in the second coating layer applied.

The material of the first coating layer, i.e., comprising a sugar and a food-grade calcium carbonate, may be applied in as many layers as desired to obtain the benefits of color stabilization described. In some embodiments, the number of layers of the first coating material applied is 3 - 7 layers; in other embodiments, 5 - 9 layers; in yet other embodiments, 7 - 11 layers. The material of the second coating layer, i.e., comprising a sugar and a natural anthocyanin-containing colorant, may similarly be applied in as many layers as desired to obtain a desired finished product color. The blue anthocyanin-containing colored coating layers may be applied overlying the uncolored calcium carbonate-containing layers, and in such embodiments, the number of layers applied may be fewer than 40, or fewer than 30, or fewer than 25, or fewer than 20 colored coating layers overlying the uncolored calcium carbonate-containing layers.

Once hardened, the panned coating may be expected to have a thickness of no more than 3.0 mm, or no more than 2.5 mm, or no more than 2.0 mm, or no more than 1.5 mm, or no more than 1.0 mm. The hard panned coating may also have a thickness of greater than 0.1 mm or greater than 0.2 mm, or greater than 0.3 mm, or greater than 0.4 mm, or greater than 0.5 mm. In some embodiments, the hard panned coating may have a thickness of from 0.1 mm to 3.0 mm, or from 0.2 mm to 2.5 mm, or from 0.3 mm to 2.0 mm, or from 0.4 mm to 1.5 mm, or from 0.5 mm to 1.0 mm.

The desired edible product center is coated with the desired sugar syrups as coating layers, in the desired number of layers for each as described above, and according to processes and techniques generally known in the art. Generally speaking, the process for manufacturing hard panned confections comprises the deposition of a plurality of coating layers of the sugar syrups, for example, between 10 and 50 layers total, by a series of syrup application and drying cycles carried out, for example, in a rotating pan. Such processes are described, for example, in "Sugar Confectionery and Chocolate Manufacture, R. Lees and E.B. Jackson, Chemical Publishing Company, February 7, 1975, and "Industrial Chocolate Manufacture and Use," editor, S.T. Beckett, Blackie & Son Ltd., Glasgow, 1988, each hereby incorporated herein by reference in its entirety for any and all purposes.

Such processes may typically be driven by the equipment utilized to perform them, which can be dry equipment or slurry equipment, both types being commercially available from, e.g., Ets Dumoulin & Cie, Tournan-en Brie, France, KOCO Food Tech, Inc., Phoenix, MD and Loynds International, Ltd., Poulton Le Fylde, England.

Panning is contrasted herein from film coating, i.e., the coatings are applied by a panning process and not a film coating process. While both are industrial processes for preparing coated edible products, such as confections and pharmaceuticals, they are very different processes that make use of very different coating formulations. Panning and some coating processes are performed in a rotating drum or "pan". Typically, the term "panning" is used with regard to the application of sugar-based coatings, such as, e.g., sucrose or dextrose, to masses of centers to produce coated products. The term "film coating" is used with regard to applying coatings that are not based on sugar to masses of centers, where the coating material typically comprises film forming components, such as a modified cellulose, e.g., hydroxypropyl methylcellulose, that is continuously applied to the centers until the desired coating thickness is achieved. Conventional panned coatings do not comprise film forming components, nor do the panned coatings of the present invention.

In a hard panning process, multiple applications of a highly concentrated sugar syrup are used to build up the uncolored portion of a sugar coating on an edible product center. This is followed by multiple applications of a concentrated sugar syrup containing colorant. The hard panning process comprises the repetitive application of thin layers of a coating solution or composition onto an intermixed mass of centers, while mixing the mass of centers, and the drying of each layer of coating solution or composition during which the sugar in the coating crystallizes between the applications of layers. In contrast, as the film coating process does not require the crystallization of a sugar coating, film coating is a continuous process, typically comprising the simultaneous application of a coating solution, distribution by mixing, and drying of the coating solution. That is, the film coating sprayers are not turned off during the film coating process, but, instead, are run continuously until the desired film coating is applied. The film coating solutions typically contain less than about 10 wt% solids, as higher concentrations would be too viscous to spray. However, in each process, coating

material is built up on the center to form the desired coating.

If the coating is to be colored, an edible colorant is added to the coating solution in the later stages of the coating process. For a hard panned confectionery, following the application of a number of layers of the uncolored sugar syrup to build up the sugar coating, a number of applications of a sugar syrup comprising a colorant are applied to provide the color coat. The color coat can require 30 or more applications of a colored coating solution to achieve the desired color. This is because the amount of dye that can be solubilized in the sugar solution is relatively low due to the high sugar solids content of the sugar coating solution. As a result, the process of building the shell, including the coloring steps, can take many hours.

In yet another aspect, the present invention is directed to a method of stabilizing a color provided by a natural blue anthocyanin-containing colorant to a hard panned coating having a plurality of coating layers comprising applying the plurality of coating layers such that none of the plurality of coating layers contains both a natural blue anthocyanin-containing colorant and a food-grade calcium carbonate.

Specific embodiments of the invention will now be demonstrated by reference to the following examples. It should be understood that these examples are disclosed solely to illustrate the invention and variations within the spirit of the invention are anticipated.

**EXAMPLE 1**

Effect of First Coating Syrup Additives on Color Stability of Hard Panned Confections Colored with Natural Blue Anthocyanin-Containing Colorant under Different Environmental Conditions

A sugar-based coating was applied to lentil-shaped chocolate centers by a hard panning process. A 74° Brix sugar (sucrose) syrup was prepared with deionized water. A natural blue anthocyanin-containing colorant ("NBA-1") was prepared by combining 75 grams of a liquid red cabbage extract (San Red RCFU, San-Ei Gen F.F.I. (USA), Inc., New York, NY) with 1 gram of a powdered purple sweet potato extract (CH 1000, Chr. Hansen, Inc., Milwaukee, WI) and adjusting to a pH of 8 with 2 M NaOH. A first coating syrup consisting of the sugar syrup with titanium dioxide added at 2.5 wt% was applied to the centers and dried in 5 layers. A second coating syrup consisting of the sugar syrup with the colorant added at 3.7 wt% was applied to the centers and dried in 17 layers. The colored centers were finished with a coating of a polishing gum followed by a wax.

The above process was repeated with an alternative first coating syrup consisting of the sugar syrup with calcium carbonate added at 10 wt%. The process was again repeated with another alternative first coating syrup consisting of the sugar syrup alone. The second coating syrup and finishing coats were the same for the second and third trials as for the first trial.

Confectionery pieces from each of the three trials were placed in controlled environments at water activities of 0.0, 0.54, and 0.75, and in an indoor environment under ambient conditions. At seven days, color measurements were performed and L*a*b* values calculated and averaged for 10 confectionery pieces from each storage condition of each trial, as shown in Table 1:

TABLE 1

| Sample Name | L* | a* | b* | $\Delta$E compared to sample with same additive at $a_w$ = 0.0 |
|---|---|---|---|---|
| NBA-1, $TiO_2$, $a_w$ = 0.0 | 39.05 | 2.7 | -22.95 | --- |
| NBA-1, $TiO_2$, $a_w$ = 0.54 | 38.61 | 2.85 | -22.98 | 0.47 |
| NBA-1, $TiO_2$ Ambient | 39.05 | 3.49 | -22.89 | 0.79 |
| NBA-1, $TiO_2$, $a_w$ = 0.75 | 39.59 | 7.74 | -22.82 | 5.07 |
| | | | | |
| NBA-1, $CaCO_3$, $a_w$ = 0.0 | 36.89 | -1.78 | -20.50 | --- |
| NBA-1, $CaCO_3$, $a_w$ = 0.54 | 36.71 | -1.52 | -20.45 | 0.32 |
| NBA-1, $CaCO_3$, Ambient | 37.44 | -1.28 | -20.47 | 0.74 |
| NBA-1, $CaCO_3$, $a_w$ = 0.75 | 37.18 | -2.39 | -18.79 | 1.84 |
| | | | | |
| NBA-1, Sugar Syrup, $a_w$ = 0.0 | 35.74 | 4.77 | -21.92 | --- |
| NBA-1, Sugar Syrup, $a_w$ = 0.54 | 35.68 | 5.20 | -22.19 | 0.51 |

(continued)

| Sample Name | L* | a* | b* | ΔE compared to sample with same additive at $a_w$ = 0.0 |
|---|---|---|---|---|
| NBA-1, Sugar Syrup, Ambient | 35.84 | 5.47 | -21.89 | 0.71 |
| NBA-1, Sugar Syrup, $a_w$ = 0.75 | 36.64 | 8.81 | -19.87 | 4.62 |

Figure 1 shows ΔE color difference values for each trial sample at each environmental condition compared to the same sample at a water activity of 0.0. Each sample experienced a color shift at the higher water activities and at ambient condition, with the greatest shift indicated by the largest ΔE values occurring at a water activity of 0.75. The ΔE values for the trial samples having titanium dioxide as an additive and no additive in a first coating layer at a water activity of 0.75 were 5.07 and 4.62, respectively, and indicate a noticeable color shift in the samples. The trial sample having calcium carbonate as an additive in a first coating layer had the least color shift at a water activity of 0.75, as measured by the smallest ΔE value of 1.84. The ΔE value of 1.84 suggests that the color of the calcium carbonate-containing sample at a water activity of 0.75 would be indistinguishable from the color of the same sample at a water activity of 0.0, and this was confirmed by visual observation.

**EXAMPLE 2**

Effect of First Coating Syrup Additives on Color Stability of Hard Panned Confections Colored with Alternate Natural Blue Anthocyanin-Containing Colorant under Different Environmental Conditions

A sugar-based coating was applied to lentil-shaped chocolate centers by a hard panning process. A 74° Brix sugar syrup was prepared with deionized water. The colorant used was a natural blue anthocyanin-containing colorant ("NBA-2") consisting of a powdered purple sweet potato and purple carrot extract (CH 5000, Chr. Hansen, Inc., Milwaukee, WI). A first coating syrup consisting of the sugar syrup with titanium dioxide added at 2.5 wt% was applied to the centers and dried in 5 layers. A second coating syrup consisting of the sugar syrup with the colorant added at 0.5 wt% was applied to the centers and dried in 17 layers. The colored centers were finished with a coating of a polishing gum followed by a wax.

The above process was repeated with an alternative first coating syrup consisting of the sugar syrup with calcium carbonate added at 10 wt%. The process was again repeated with another alternative first coating syrup consisting of the sugar syrup with 5 wt% calcium carbonate and 1.25 wt% titanium dioxide added. The second coating syrup and finishing coats were the same for the second and third trials as for the first trial.

Confectionery pieces from each of the three trials were placed in controlled environments at water activities of 0.0, 0.54, and 0.75, and in an indoor environment under ambient conditions. At seven days, color measurements were performed and L*a*b* values calculated and averaged for 10 confectionery pieces from each storage condition of each trial, as shown in Table 2:

TABLE 2

| Sample Name | L* | a* | b* | ΔE compared to sample with same additive at $a_w$ = 0.0 |
|---|---|---|---|---|
| NBA-2, $TiO_2$, $a_w$ = 0.0 | 41.69 | -1.09 | -20.13 | --- |
| NBA-2, $TiO_2$, $a_w$ = 0.54 | 40.16 | 0.48 | -20.67 | 2.26 |
| NBA-2, $TiO_2$, Ambient | 40.97 | 0.55 | -20.52 | 1.83 |
| NBA-2, $TiO_2$, $a_w$ = 0.75 | 42.31 | 2.29 | -19.29 | 3.54 |
| | | | | |
| NBA-2, $CaCO_3$, $a_w$ = 0.0 | 38.80 | -2.33 | -18.12 | --- |
| NBA-2, $CaCO_3$, $a_w$ = 0.54 | 38.51 | -2.09 | -18.2 | 0.38 |
| NBA-2, $CaCO_3$, Ambient | 37.87 | -1.20 | -18.4 | 1.49 |
| NBA-2, $CaCO_3$, $a_w$ = 0.75 | 39.55 | -1.56 | -16.09 | 2.30 |
| | | | | |
| NBA-2, $TiO_2/CaCO_3$, aw = 0.0 | 41.32 | -0.6 | -20.32 | --- |
| NBA-2, $TiO_2/CaCO_3$, aw = 0.54 | 40.49 | -0.96 | -19.9 | 1.00 |

(continued)

| Sample Name | L* | a* | b* | ΔE compared to sample with same additive at $a_w$ = 0.0 |
|---|---|---|---|---|
| NBA-2, $TiO_2/CaCO_3$, Ambient | 40.78 | -0.23 | -19.94 | 0.76 |
| NBA-2, $TiO_2/CaCO_3$, aw = 0.75 | 44.32 | -2.15 | -16.65 | 4.99 |

Figure 2 shows ΔE color difference values for each trial sample at each environmental condition compared to the same sample at a water activity of 0.0. Each sample experienced a color shift at the higher water activities and at ambient condition, with the greatest shift indicated by the largest ΔE values occurring at a water activity of 0.75. The ΔE values for the trial samples having titanium dioxide and titanium dioxide and calcium carbonate together as an additive in a first coating layer at a water activity of 0.75 were 3.54 and 4.99, respectively, and indicate a noticeable color shift in the samples. The trial sample having calcium carbonate as an additive in a first coating layer had the least color shift at a water activity of 0.75, as measured by the smallest ΔE value of 2.30. The ΔE value of 2.30 suggests that the color of the calcium carbonate-containing sample at a water activity of 0.75 would be indistinguishable from the color of the same sample at a water activity of 0.0, and this was confirmed by visual observation.

**EXAMPLE 3**

Effect of Different Metal Salts as First Coating Syrup Additives on Color Stability of Hard Panned Confections Colored with Natural Blue Anthocyanin-Containing Colorant

An experiment was conducted with different metal salts as first coating syrup additives for producing hard panned confections colored with a natural blue anthocyanin-containing colorant. The objective was to compare the effect of carbonates having monovalent cations versus calcium carbonate having a divalent anion. Whereas calcium carbonate is essentially insoluble in water, sodium carbonate and potassium carbonate are soluble in water. This causes them to impact the pH of the sugar syrup, and thus the color of the anthocyanin-containing colorant in the syrup, and to provide no opacifying to the coating. Therefore, titanium dioxide was used in combination with the alternative carbonates to provide the needed opacity.

Insoluble calcium sulfate was also tested in combination with titanium dioxide as an alternative to calcium carbonate to assess whether the reason for the effectiveness of calcium carbonate was related to the anthocyanin color being "fixed" by the presence of the calcium ion.

A sugar-based coating was applied to lentil-shaped chocolate centers by a hard panning process. A 74° Brix sugar syrup was prepared with deionized water. The colorant used was a natural blue anthocyanin-containing colorant ("NBA-2") consisting of a powdered purple sweet potato and purple carrot extract (CH 5000, Chr. Hansen, Inc., Milwaukee, WI). A first coating syrup consisting of the sugar syrup with calcium carbonate added at 10 wt% was applied to the centers and dried in 5 layers. A second coating syrup consisting of the sugar syrup with the colorant added at 0.5 wt% was applied to the centers and dried in 17 layers. The colored centers were finished with a coating of a polishing gum followed by a wax.

The above process was repeated with an alternative first coating syrup consisting of the sugar syrup with 1 wt% sodium carbonate and 2.5 wt% titanium dioxide added. The process was again repeated with another alternative first coating syrup consisting of the sugar syrup with 1 wt% potassium carbonate and 2.5 wt% titanium dioxide added. The process was again repeated with yet another alternative first coating syrup consisting of the sugar syrup with 1 wt% calcium sulfate and 2.5 wt% titanium dioxide added. The second coating syrup and finishing coats were the same for the second to fourth trials as for the first trial.

Color measurements were performed and L*a*b* values calculated and averaged for 10 confectionery pieces from each trial, as shown in Table 3:

TABLE 3

| Sample Name | L* | a* | b* | ΔE compared to sample with $CaCO_3$ as additive |
|---|---|---|---|---|
| NBA-2, $CaCO_3$ | 41.69 | -1.09 | -20.13 | --- |
| NBA-2, $Na_2CO_3/TiO_2$ | 37.87 | -1.20 | -18.40 | 16.70 |
| NBA-2, $K_2CO_3/TiO_2$ | 35.59 | -9.78 | -4.25 | 17.82 |
| NBA-2, $CaSO_4/TiO_2$ | 31.12 | -9.55 | -4.18 | 8.96 |

Compared to the inventive sample containing calcium carbonate as an additive in a first coating syrup, each of the other samples containing alternative metal salts as an additive gave ΔE color difference values of about 9 or greater, indicating noticeable color differences. That is, the alternative metal salts did not provide the same stabilizing effect as calcium carbonate on the natural blue anthocyanin-containing colorant used in the panned coating. In addition, using sodium carbonate and titanium dioxide together as an additive in a first coating syrup resulted in a panned coating color that was unacceptably two-toned. The test results indicate that the color stabilization provided by calcium carbonate may not be attributed to color "fixing" by the calcium ion or to the presence of divalent cations in solution, since calcium carbonate is insoluble in water.

**EXAMPLE 4**

Effect of Using Tap Water in Coating Syrups and Calcium Carbonate in First Coating Syrup on Color Stability of Hard Panned Confections Colored with Natural Blue Anthocyanin-Containing Colorant under Different Environmental Conditions

A sugar-based coating was applied to lentil-shaped chocolate centers by a hard panning process. A 74° Brix sugar syrup was prepared with untreated tap water containing small amounts of metal ions such as calcium, sodium, and magnesium. The colorant used was the same as in Example 1, "NBA-1." A first coating syrup consisting of the sugar syrup with calcium carbonate added at 10 wt% was applied to the centers and dried in 5 layers. A second coating syrup consisting of the sugar syrup with the colorant added at 3.7 wt% was applied to the centers and dried in 17 layers. The colored centers were finished with a coating of a polishing gum followed by a wax.

Confectionery pieces from the trial were placed in controlled environments at water activities of 0.0, 0.54, and 0.75, and in an indoor environment under ambient conditions. At seven days, color measurements were performed and L*a*b* values calculated and averaged for 10 confectionery pieces from each storage condition, as shown in Table 4, along with the L*a*b* values obtained for the calcium carbonate-containing trial samples of Example 1, which used sugar syrups prepared with deionized water:

TABLE 4

| Sample Name | L* | a* | b* | ΔE compared to "Tap"sample at $a_w$ = 0.0 |
|---|---|---|---|---|
| NBA-1, $CaCO_3$, Tap, $a_w$ = 0.0 | 36.47 | -0.61 | -22.11 | --- |
| NBA-1, $CaCO_3$, Tap, $a_w$ = 0.54 | 36.55 | -0.49 | -22.23 | 0.19 |
| NBA-1, $CaCO_3$, Tap, Ambient | 36.33 | 0.28 | -22.16 | 0.90 |
| NBA-1, $CaCO_3$, Tap, $a_w$ = 0.75 | 36.91 | 0.63 | -21.30 | 1.55 |
| | | | | ΔE compared to "DI" sample at $a_w$ = 0.0 |
| NBA-1, $CaCO_3$, DI, $a_w$ = 0.0 | 36.89 | -1.78 | -20.50 | --- |
| NBA-1, $CaCO_3$, DI, $a_w$ = 0.54 | 36.71 | -1.52 | -20.45 | 0.32 |
| NBA-1, $CaCO_3$, DI, Ambient | 37.44 | -1.28 | -20.47 | 0.74 |
| NBA-1, $CaCO_3$, DI, $a_w$ = 0.75 | 37.18 | -2.39 | -18.79 | 1.84 |

Figure 3 shows ΔE color difference values for each trial sample at each environmental condition compared to the same sample at a water activity of 0.0. Each sample experienced a color shift at the higher water activities and at ambient condition, with the greatest shift indicated by the largest ΔE values occurring at a water activity of 0.75. However, no significant differences were seen between the samples using deionized water versus tap water in the sugar syrup.

The foregoing description of embodiments of the invention is for illustration only and is not to be deemed limiting of the invention, which is defined by the appended claims.

## Claims

**1.** A hard panned coating having a plurality of coating layers, the plurality of coating layers comprising:

a) a first coating layer comprising a sugar and a food-grade calcium carbonate, and
b) a second coating layer comprising a sugar and a natural blue anthocyanin-containing colorant;

wherein none of the plurality of coating layers contains both a natural blue anthocyanin-containing colorant and a food-grade calcium carbonate.

**2.** The hard panned coating of claim 1, wherein the hard panned coating has a color having a ΔE color difference of 10 or less after seven days of storage at a water activity of 0.75 compared to the color after seven days of storage at a water activity of 0.0.

**3.** The hard panned coating of claim 1 or claim 2, wherein the natural blue anthocyanin-containing colorant has a blue color in aqueous solution at a pH of 6 to 10.

**4.** The hard panned coating of any one of the preceding claims, wherein the second coating layer further comprises a natural yellow colorant.

**5.** The hard panned coating of any one of the preceding claims, wherein the first coating layer sugar is provided in a sugar syrup comprising the first coating layer sugar and water.

**6.** The hard panned coating of claim 5, wherein the sugar syrup comprises sucrose.

**7.** The hard panned coating of any one of the preceding claims, wherein the food-grade calcium carbonate has a median particle size of 0.6 to 0.8 microns.

**8.** A hard panned confection comprising:

a) an edible product center, and
b) a hard panned coating having a plurality of coating layers, the plurality of coating layers comprising:

i. a first coating layer comprising a sugar and a food-grade calcium carbonate, and
ii. a second coating layer comprising a sugar and a natural blue anthocyanin-containing colorant;

wherein none of the plurality of coating layers contains both a natural blue anthocyanin-containing colorant and a food-grade calcium carbonate.

**9.** The hard panned confection of claim 8, wherein the hard panned confection has a color having a ΔE color difference of 10 or less after seven days of storage at a water activity of 0.75 compared to the color after seven days of storage at a water activity of 0.0.

**10.** The hard panned confection of claim 8 or claim 9, wherein the hard-panned coating is a coating according to any one of claims 3 to 7.

**11.** A method of hard pan coating an edible product center comprising applying a plurality of coating layers to the edible product center, wherein applying comprises:

a) applying a first coating layer comprising a sugar and a food-grade calcium carbonate to the edible product center; and
b) applying a second coating layer comprising a sugar and a natural blue anthocyanin-containing colorant to the edible product center,

wherein none of the plurality of coating layers contains both a natural blue anthocyanin-containing colorant and a food-grade calcium carbonate.

**12.** The method of claim 11, further comprising at least partially drying the coating layers after each of steps a) and b).

**13.** The method of claim 11 or claim 12, wherein the first coating layer sugar is provided in a sugar syrup comprising the first coating layer sugar and water.

**14.** A method of stabilizing a color provided by a natural blue anthocyanin-containing colorant to a hard panned coating having a plurality of coating layers comprising applying the plurality of coating layers such that none of the plurality of coating layers contains both a natural blue anthocyanin-containing colorant and a food-grade calcium carbonate.

## Patentansprüche

1. Ein dragierter Überzug, der eine Vielzahl an Überzugsschichten aufweist, wobei die Vielzahl an Überzugsschichten umfasst:

   a) eine erste Überzugsschicht, umfassend eine Zuckerart und ein Calciumcarbonat in Lebensmittelqualität, und
   b) eine zweite Überzugsschicht, umfassend eine Zuckerart und einen natürlichen blauen anthocyanhaltigen Farbstoff;

   wobei keine der Vielzahl an Überzugsschichten sowohl einen natürlichen blauen anthocyanhaltigen Farbstoff als auch ein Calciumcarbonat in Lebensmittelqualität enthält.

2. Dragierter Überzug nach Anspruch 1, wobei der dragierte Überzug eine Farbe hat, die nach sieben Tagen Lagerung bei einer Wasseraktivität von 0,75 einen ΔE-Farbunterschied von 10 oder weniger verglichen mit der Farbe nach sieben Tagen Lagerung bei einer Wasseraktivität von 0,0 aufweist.

3. Dragierter Überzug nach Anspruch 1 oder Anspruch 2, wobei der natürliche blaue anthocyanhaltige Farbstoff in einer wässrigen Lösung bei einem pH-Wert von 6 bis 10 eine blaue Farbe aufweist.

4. Dragierter Überzug nach einem der vorangegangenen Ansprüche, wobei die zweite Überzugsschicht weiterhin einen natürlichen gelben Farbstoff enthält.

5. Dragierter Überzug nach einem der vorangegangenen Ansprüche, wobei der Zucker der ersten Überzugsschicht in einem Zuckersirup, welcher den Zucker und das Wasser der ersten Überzugsschicht umfasst, bereitgestellt wird.

6. Dragierter Überzug nach Anspruch 5, wobei der Zuckersirup Saccharose enthält.

7. Dragierter Überzug nach einem der vorangegangenen Ansprüche, wobei das Calciumcarbonat in Lebensmittelqualität eine mittlere Partikelgröße von 0,6 bis 0,8 Mikrometern aufweist.

8. Ein dragiertes Konfekt, umfassend:

   a) einen essbaren Produktkern, und
   b) einen dragierten Überzug, der eine Vielzahl an Überzugsschichten aufweist, wobei die Vielzahl an Überzugsschichten umfasst:

      i. eine erste Überzugsschicht, umfassend eine Zuckerart und ein Calciumcarbonat in Lebensmittelqualität, und
      ii. eine zweite Überzugsschicht, umfassend eine Zuckerart und einen natürlichen blauen anthocyanhaltigen Farbstoff;

   wobei keine der Vielzahl an Überzugsschichten sowohl einen natürlichen blauen anthocyanhaltigen Farbstoff als auch ein Calciumcarbonat in Lebensmittelqualität enthält.

9. Dragiertes Konfekt nach Anspruch 8, wobei das dragierte Konfekt eine Farbe hat, die nach sieben Tagen Lagerung bei einer Wasseraktivität von 0,75 einen ΔE-Farbunterschied von 10 oder weniger verglichen mit der Farbe nach sieben Tagen Lagerung bei einer Wasseraktivität von 0,0 aufweist.

10. Dragiertes Konfekt nach Anspruch 8 oder Anspruch 9, wobei der dragierte Überzug ein Überzug gemäß einem der Ansprüche 3 bis 7 ist.

11. Ein Verfahren zum Dragieren eines essbaren Produktkerns, umfassend das Auftragen einer Vielzahl an Überzugsschichten auf den essbaren Produktkern, wobei das Auftragen umfasst:

    a) Auftragen einer ersten Überzugsschicht, umfassend eine Zuckerart und ein Calciumcarbonat in Lebensmittelqualität, auf den essbaren Produktkern; und
    b) Auftragen einer zweiten Überzugsschicht, umfassend eine Zuckerart und einen natürlichen blauen anthocyanhaltigen Farbstoff, auf den essbaren Produktkern,

wobei keine der Vielzahl an Überzugsschichten sowohl einen natürlichen blauen anthocyanhaltigen Farbstoff als auch ein Calciumcarbonat in Lebensmittelqualität enthält.

**12.** Verfahren nach Anspruch 11, weiterhin umfassend zumindest teilweise das Trocknen der Überzugsschichten nach jedem der Schritte a) und b).

**13.** Verfahren nach Anspruch 11 oder Anspruch 12, wobei der Zucker der ersten Überzugsschicht in einem Zuckersirup, welcher den Zucker und das Wasser der ersten Überzugsschicht umfasst, bereitgestellt wird.

**14.** Ein Verfahren zur Stabilisierung einer Farbe, die durch einen natürlichen blauen anthocyanhaltigen Farbstoff an einen dragierten Überzug, welcher eine Vielzahl an Überzugsschichten aufweist, abgegeben wird, umfassend das Auftragen der Vielzahl an Überzugsschichten in solchem Maße, dass keine der Vielzahl an Überzugsschichten sowohl einen natürlichen blauen anthocyanhaltigen Farbstoff als auch ein Calciumcarbonat in Lebensmittelqualität enthält.

## Revendications

**1.** Revêtement dragéifié dur constitué d'une pluralité de couches de revêtement, la pluralité de couches de revêtement comprenant :

a) une première couche de revêtement comprenant un sucre et un carbonate de calcium de qualité alimentaire, et
b) une seconde couche de revêtement comprenant un sucre et un colorant contenant de l'anthocyanine bleue naturelle ;

dans lequel aucune couche parmi la pluralité de couches de revêtement ne contient à la fois un colorant contenant de l'anthocyanine bleue naturelle et un carbonate de calcium de qualité alimentaire.

**2.** Revêtement dragéifié dur selon la revendication 1, dans lequel le revêtement dragéifié dur possède une couleur dont la différence de couleur $\Delta E$ est inférieure ou égale à 10 après sept jours de conservation avec une activité de l'eau de 0,75 par rapport à la couleur après sept jours de conservation avec une activité de l'eau de 0,0.

**3.** Revêtement dragéifié dur selon la revendication 1 ou 2, dans lequel le colorant contenant de l'anthocyanine bleue naturelle a une couleur bleue en solution aqueuse à un pH compris entre 6 et 10.

**4.** Revêtement dragéifié dur selon l'une quelconque des revendications qui précèdent, dans lequel la seconde couche de revêtement comprend en outre un colorant jaune naturel.

**5.** Revêtement dragéifié dur selon l'une quelconque des revendications qui précèdent, dans lequel le sucre de la première couche de revêtement est fourni dans un sirop de sucre comprenant le sucre de la première couche de revêtement et de l'eau.

**6.** Revêtement dragéifié dur selon la revendication 5, dans lequel le sirop de sucre comprend du saccharose.

**7.** Revêtement dragéifié dur selon l'une quelconque des revendications qui précèdent, dans lequel le carbonate de calcium de qualité alimentaire présente une taille de particules médiane comprise entre 0,6 et 0,8 micron.

**8.** Confiserie dragéifiée dure comprenant :

a) un coeur de produit comestible et
b) un revêtement dragéifié dur constitué d'une pluralité de couches de revêtement, la pluralité de couches de revêtements comprenant :

i. une première couche de revêtement comprenant un sucre et un carbonate de calcium de qualité alimentaire et
ii. une seconde couche de revêtement comprenant un sucre et un colorant contenant de l'anthocyanine bleue naturelle ;

dans lequel aucune des couches parmi la pluralité de couches de revêtement ne contient à la fois un colorant contenant de l'anthocyanine bleue naturelle et un carbonate de calcium de qualité alimentaire.

**9.** Confiserie dragéifiée dure selon la revendication 8, dans laquelle la confiserie dragéifiée dure possède une couleur dont la différence de couleur ΔE est inférieure ou égale à 10 après sept jours de conservation avec une activité de l'eau de 0,75 par rapport à la couleur après sept jours de conservation avec une activité de l'eau de 0,0.

**10.** Confiserie dragéifiée dure selon la revendication 8 ou 9, dans laquelle le revêtement dragéifié dur est un revêtement selon l'une quelconque des revendications 3 à 7.

**11.** Procédé d'application d'un revêtement dragéifié dur sur un coeur de produit comestible comprenant l'application d'une pluralité de couches de revêtement sur le coeur de produit comestible, l'application comprenant :

a) l'application d'une première couche de revêtement comprenant un sucre et un carbonate de calcium de qualité alimentaire sur le coeur de produit comestible ; et
b) l'application d'une seconde couche de revêtement comprenant un sucre et un colorant contenant de l'anthocyanine bleue naturelle sur le coeur de produit comestible,

dans laquelle aucune des couches parmi la pluralité de couches de revêtement ne contient à la fois un colorant contenant de l'anthocyanine bleue naturelle et un carbonate de calcium de qualité alimentaire.

**12.** Procédé selon la revendication 11, comprenant en outre le séchage au moins partiel des couches de revêtement après chacune des étapes a) et b).

**13.** Procédé selon la revendication 11 ou 12, dans lequel le sucre de la première couche de revêtement est fourni dans un sirop de sucre comprenant le sucre de la première couche de revêtement et de l'eau.

**14.** Procédé de stabilisation d'une couleur apportée par un colorant contenant de l'anthocyanine bleue naturelle à un revêtement dragéifié dur comprenant une pluralité de couches de revêtement, ledit procédé comprenant l'application de la pluralité de couches de revêtements telle qu'aucune des couches parmi la pluralité de couches de revêtement ne contient à la fois un colorant contenant de l'anthocyanine bleue naturelle et un carbonate de calcium de qualité alimentaire.

FIG. 1

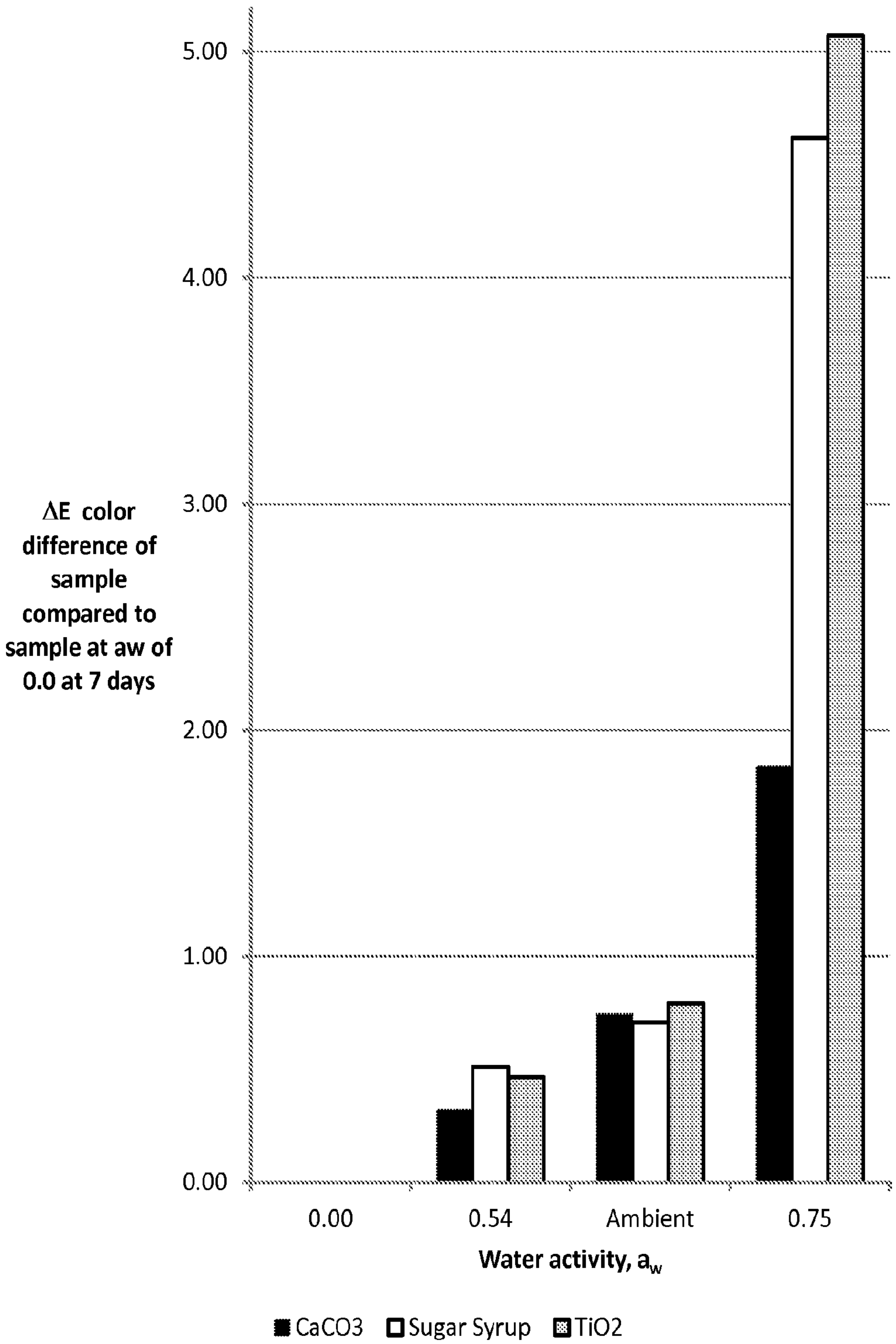
ΔE color difference of sample compared to sample at aw of 0.0 at 7 days
5.00
4.00
3.00
2.00
1.00
0.00
0.00
0.54
Ambient
0.75
Water activity, $a_w$
CaCO3
Sugar Syrup
TiO2

FIG. 2

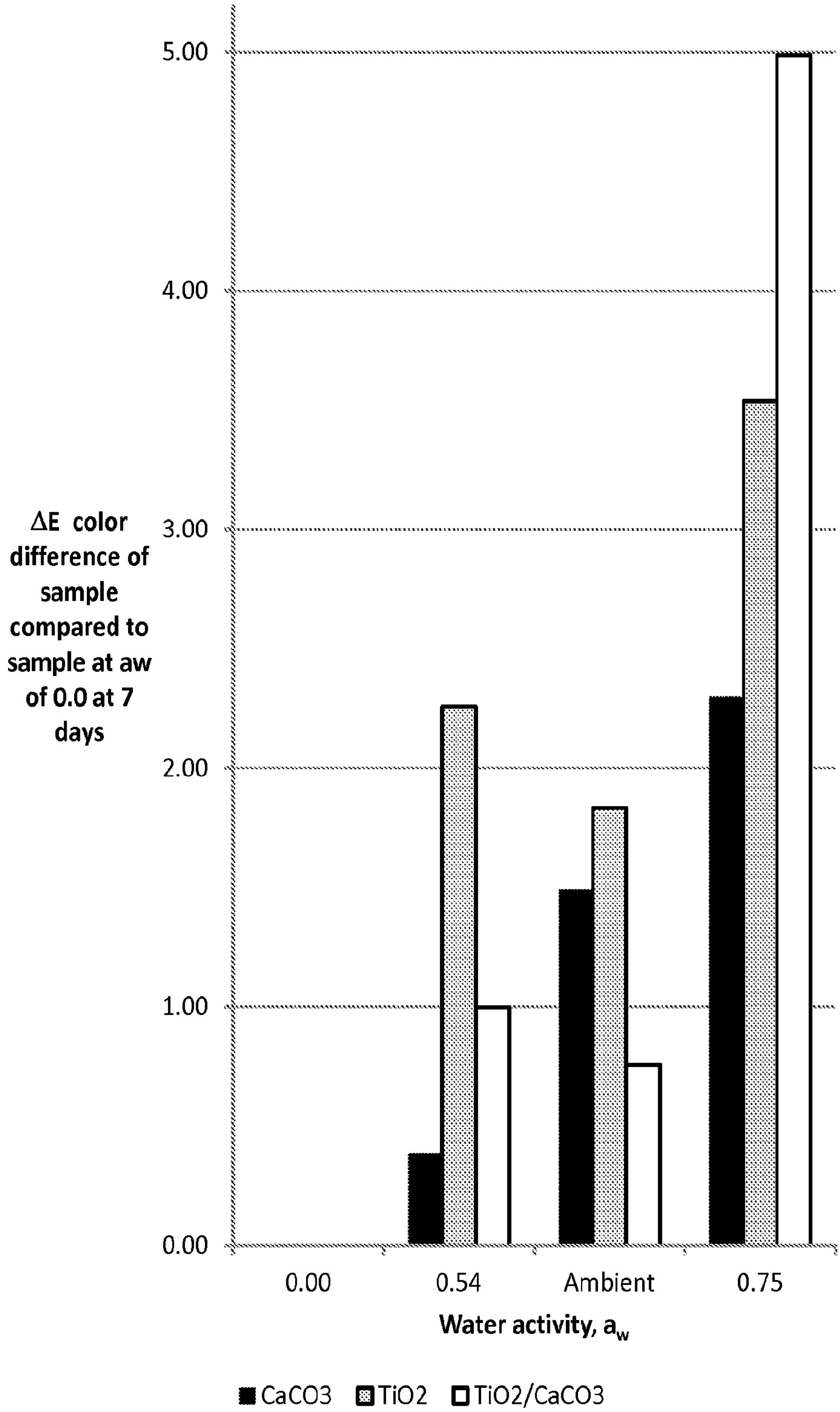
ΔE color difference of sample compared to sample at aw of 0.0 at 7 days
5.00
4.00
3.00
2.00
1.00
0.00
0.00
0.54
Ambient
0.75
Water activity, $a_w$
CaCO3
TiO2
TiO2/CaCO3

FIG. 3

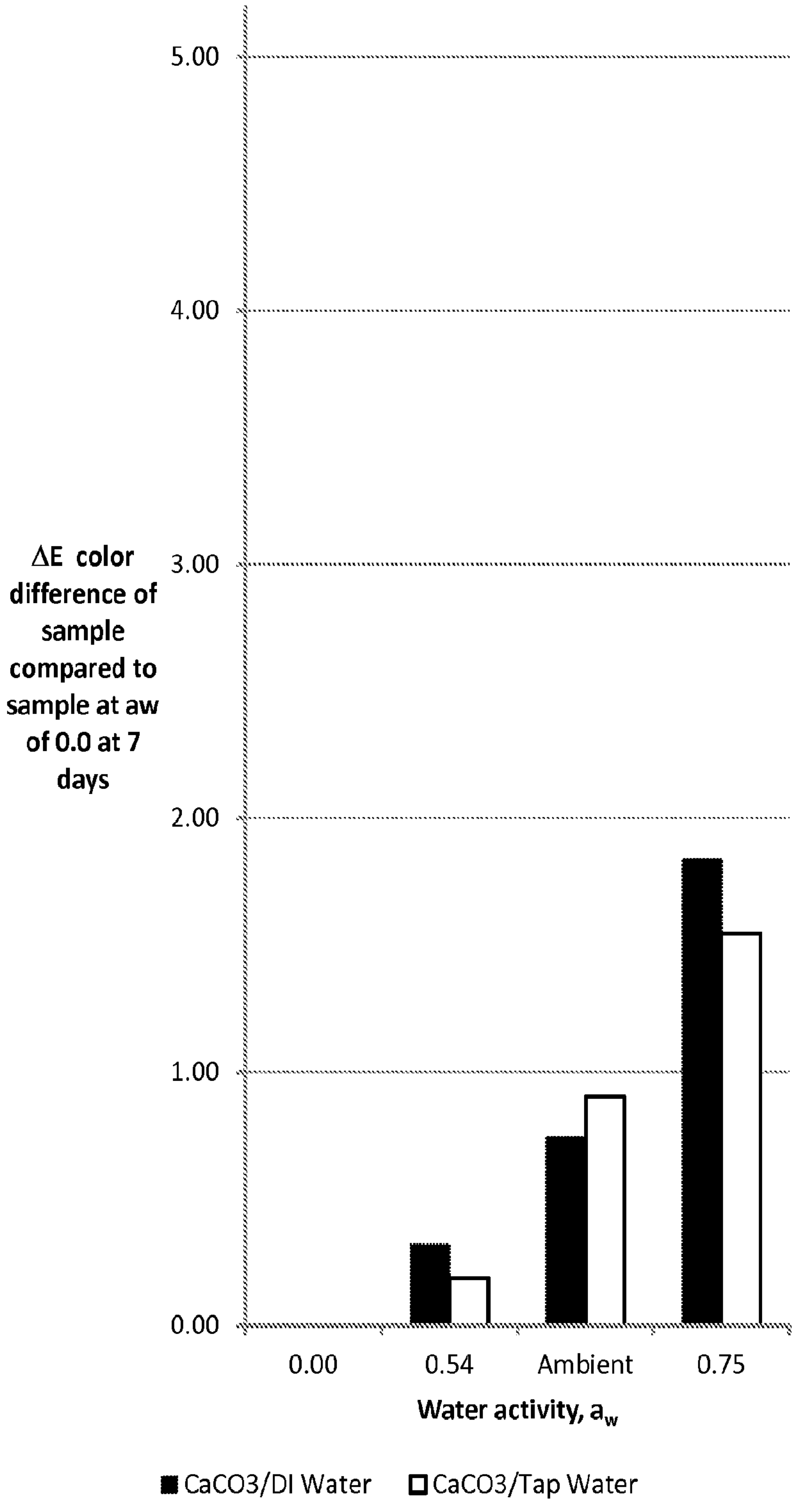

5.00
4.00
3.00
2.00
1.00
0.00
ΔE color difference of sample compared to sample at aw of 0.0 at 7 days
0.00
0.54
Ambient
0.75
Water activity, $a_w$
CaCO3/DI Water
CaCO3/Tap Water

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011065977 A
- EP 2545787 A
- US 2004022904 A
- EP 1183954 A
- US 2005208189 A


### Non-patent literature cited in the description


- **R. LEES ; E.B. JACKSON.** Sugar Confectionery and Chocolate Manufacture. Chemical Publishing Company, 07 February 1975
- Industrial Chocolate Manufacture and Use. Blackie & Son Ltd, 1988